(19) Europäisches Patentamt
European Patent Office
Office européen des brevets

(11) EP 4 603 543 B1

(12) **EUROPEAN PATENT SPECIFICATION**

(45) Date of publication and mention of the grant of the patent:
**05.08.2026 Bulletin 2026/32**

(21) Application number: **23877099.4**

(22) Date of filing: **21.09.2023**

(51) International Patent Classification (IPC):
***C08L 81/02*** *(2006.01)* ***C08J 3/20*** *(2006.01)*
***C08J 5/04*** *(2006.01)* ***C08K 3/04*** *(2006.01)*
***C08K 7/00*** *(2006.01)* ***C08K 7/06*** *(2006.01)*

(52) Cooperative Patent Classification (CPC):
(C-Sets available)
**C08J 5/042; C08G 75/02; C08G 75/0204; C08G 75/0209; C08G 75/045; C08J 3/20; C08J 5/04; C08J 5/10; C08K 3/04; C08K 7/00; C08K 7/06; C08L 81/02; C09D 181/02; C09J 181/02;** C08J 2381/02; (Cont.)

(86) International application number:
**PCT/JP2023/034211**

(87) International publication number:
**WO 2024/080093 (18.04.2024 Gazette 2024/16)**

(54) **POLY(ARYLENE SULFIDE) RESIN COMPOSITION, MOLDED ARTICLE, AND PRODUCTION METHODS THEREFOR**

POLYARYLENSULFIDHARZZUSAMMENSETZUNG, FORMKÖRPER UND HERSTELLUNGSVERFAHREN DAFÜR

COMPOSITION DE RÉSINE DE SULFURE DE POLYARYLÈNE, ARTICLE MOULÉ, ET PROCÉDÉS DE FABRICATION ASSOCIÉS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.10.2022 JP 2022164619**

(43) Date of publication of application:
**20.08.2025 Bulletin 2025/34**

(73) Proprietor: **DIC Corporation**
**Tokyo 174-8520 (JP)**

(72) Inventors:
- **WATANABE, Kazuhiro**
  **Ichihara-shi, Chiba 290-8585 (JP)**
- **ABE, Fumiaki**
  **Ichihara-shi, Chiba 290-8585 (JP)**
- **KANDA, Tomomichi**
  **Ichihara-shi, Chiba 290-8585 (JP)**

(74) Representative: **Kraus & Lederer PartGmbB**
**Thomas-Wimmer-Ring 15**
**80539 München (DE)**

(56) References cited:
**WO-A1-2018/199008** **JP-A- 2004 168 897**
**KR-A- 20190 079 099** **US-A- 5 093 035**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 603 543 B1

(52) Cooperative Patent Classification (CPC): (Cont.)
C08J 2381/04; C08K 2201/001; C08K 2201/005;
C08K 2201/006; C08K 2201/011; C08K 2201/014

C-Sets
**C08K 3/04, C08L 81/02;**
**C08K 7/06, C08L 81/02**

## Description

## TECHNICAL FIELD

The present disclosure relates to a poly(arylene sulfide) resin composition, a poly(arylene sulfide) resin molded article, and methods for producing the poly(arylene sulfide) resin composition and the poly(arylene sulfide) resin molded article.

## BACKGROUND ART

With increasing miniaturization, high performance, and high output of electric and electronic parts, such as in-vehicle electrical parts and mobile terminals, installed in hybrid vehicles, electric vehicles, and the like, there is an increasing need for high thermal conductivity materials that prevent deterioration of parts and/or deterioration of product performance due to heat of the parts. In addition, along with increasing functionality of vehicles and devices, the types and applications of parts to be installed tend to increase. To prevent them from interfering with each other, the use of a material with electrical conductivity is required. Furthermore, to achieve weight reduction of various parts, attempts to replace metal with a resin material are also being actively made.

On the other hand, poly(arylene sulfide) (hereinafter represented as PAS) resins represented by poly(phenylene sulfide) (hereinafter represented as PPS) resins have excellent mechanical strength, chemical resistance, moldability, and dimensional stability in addition to excellent heat resistance, and thus are widely used in the fields, such as automobile parts, electricity and electronics. A PAS resin alone has poor thermal conductivity and/or electrical conductivity, but blending a PAS resin with another material, for example, a carbon-based material, to form a composition can impart thermal conductivity and/or electrical conductivity.

For example, a resin composition containing from 1 to 30 parts by weight of carbon fibers, from 1 to 40 parts by weight of graphite, and from 30 to 98 parts by weight of a poly(arylene sulfide) resin is disclosed (Patent Literature 1). In addition, a thermally conductive resin composition containing from 30 to 90 mass% of a poly(phenylene sulfide) resin and from 10 to 70 mass% of flake graphite is disclosed (Patent Literature 2). Furthermore, a resin composition containing from 40 to 98.5 wt.% of poly(arylene sulfide), from 1 to 40 wt.% of a carbon precursor, and from 0.5 to 30 wt.% of graphite or electrically conductive carbon black is disclosed (Patent Literature 3). Conductive blends comprising from 20 to 92 wt.% polyarylenesulfide, 4 to 60 wt.% conductive carbon black 4 to 60 wt.% graphite, and 0.01 to 150 wt.% glass fibres are also known (Patent Literature 4).

## CITATION LIST

Patent Literature

Patent Literature 1: WO 2016/063855
Patent Literature 2: WO 2015/190324
Patent Literature 3: JP 2011-006707 A
Patent Literature 4: US 5093035 A

## SUMMARY OF INVENTION

Technical Problem

However, to greatly improve thermal conductivity and/or electrical conductivity by these methods, a carbon-based material has needed to be highly filled. Highly filling a resin with a carbon-based material tends to increase the melt viscosity of a resin composition due to the interaction between the materials. Thus, it has been difficult to achieve both the maintenance of fluidity required during melt-kneading and molding and high thermal conductivity and/or high electrical conductivity.

Thus, an object to be attained by the present disclosure is to provide a PAS molded article having excellent fluidity, thermal conductivity, and electrical conductivity, a PAS resin composition that can provide the molded article, and methods for producing the molded article and the composition.

## SOLUTION TO PROBLEM

As a result of diligent studies to attain the above object, the inventors of the present disclosure have found that blending a PAS resin (A) having a specific melt viscosity, flake graphite (B), and furnace carbon black having a certain specific surface area as electrically conductive carbon black (C) as essential components achieves both excellent fluidity and excellent thermal conductivity and electrical conductivity, and completed the present disclosure.
That is, the present disclosure relates to a PAS resin composition containing a PAS resin (A), flake graphite (B), and electrically conductive carbon black (C) as essential components, wherein

the PAS resin (A) has a melt viscosity (V6) in a range of 5 to 45 [Pa·s];
the electrically conductive carbon black (C) is furnace carbon black having a specific surface area of 50 to 300 [$m^2$/g];
a content of the flake graphite (B) is 100 to 230 parts by mass, and a content of the electrically conductive carbon black (C) is 1 to 30 parts by mass, per 100 parts by mass of the PAS resin (A); and
the PAS resin composition has a melt viscosity (R) in a range of 100 to 400 [Pa·s].

In addition, the present disclosure relates to a method for producing a PAS resin composition, the method including blending a PAS resin (A), flake graphite (B), and electrically conductive carbon black (C) as essential components, and melt-kneading the mixture at a temperature equal to or higher than a melting point of the PAS resin, wherein

the PAS resin (A) has a melt viscosity (V6) in a range of 5 to 45 [Pa·s];
the electrically conductive carbon black (C) is furnace carbon black having a specific surface area of 50 to 300 [$m^2$/g];
a content of the flake graphite (B) is 100 to 230 parts by mass, and a content of the electrically conductive carbon black (C) is 1 to 30 parts by mass, per 100 parts by mass of the PAS resin (A); and
the PAS resin composition has a melt viscosity (R) in a range of 100 to 400 [Pa·s].

Advantageous Effects of Invention

According to the present disclosure, there can be provided a PAS resin molded article with both excellent fluidity and excellent thermal conductivity and electrical conductivity, a PAS resin composition that can provide the molded article, and a method for producing the molded article and the composition.

## DESCRIPTION OF EMBODIMENTS

Hereinafter, an embodiment of the present disclosure will be described in detail.
A PAS resin composition according to the present embodiment is a PAS resin composition containing a PAS resin (A), flake graphite (B), and electrically conductive carbon black (C) as essential components, and is characterized in that

the PAS resin (A) has a melt viscosity (V6) in a range of 5 to 45 [Pa·s];
the electrically conductive carbon black (C) is furnace carbon black having a specific surface area of 50 to 300 [$m^2$/g]; and
a content of the flake graphite (B) is 100 to 230 parts by mass, and a content of the electrically conductive carbon black (C) is 1 to 30 parts by mass, per 100 parts by mass of the PAS resin (A). The PAS resin composition will be described below.

PAS Resin (A)

The PAS resin composition according to the present embodiment contains a PAS resin (A) as an essential component.
The PAS resin (A) has a resin structure with a structure in which an aromatic ring and a sulfur atom are bonded to each other as a repeating unit. Specifically, the PAS resin (A) is a resin having a structural site represented by General Formula (1) below as a repeating unit:

[Chem. 1]

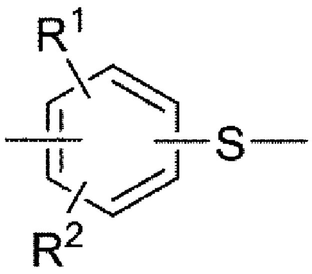

Formula (1)

where $R^1$ and $R^2$ each independently represent a hydrogen atom, an alkyl group having from 1 to 4 carbon atoms, a nitro group, an amino group, a phenyl group, a methoxy group, or an ethoxy group, and further as necessary a trifunctional structural site represented by General Formula (2) below as a repeating unit:

[Chem. 2]

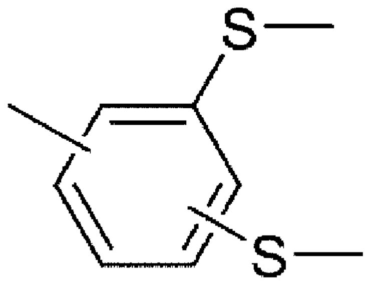

Formula (2)

The trifunctional structural site represented by Formula (2) is preferably in a range of 0.001 to 3 mol% and particularly preferably in a range of 0.01 to 1 mol% relative to a total number of moles with other structural sites.

Here, in the structural site represented by General Formula (1) above, in particular, $R^1$ and $R^2$ in the formula are preferably hydrogen atoms from the viewpoint of mechanical strength of the PAS resin (A). In that case, examples include those represented by Formula (3) below, in which the sulfur atom is attached at the para position, and those represented by Formula (4) below, in which the sulfur atom is attached at the meta position.

[Chem. 3]

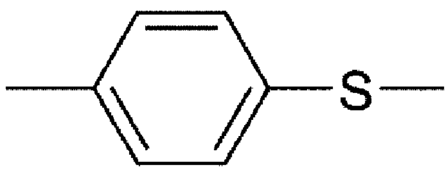

Formula (3)

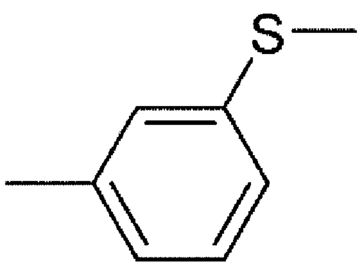

Formula (4)

Of these, in particular, the structure represented by General Formula (3) above, in which the sulfur atom is attached at the para position of the aromatic ring in the repeating unit is preferred in terms of heat resistance and

crystallinity of the PAS resin (A).

In addition, the PAS resin (A) may contain not only the structural sites represented by General Formulas (1) and (2) above but also structural sites represented by Structural Formulas (5) to (8) below:

[Chem. 4]

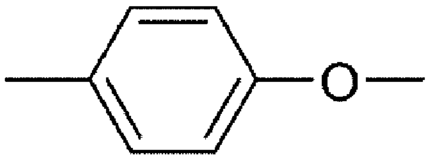

Formula (5)

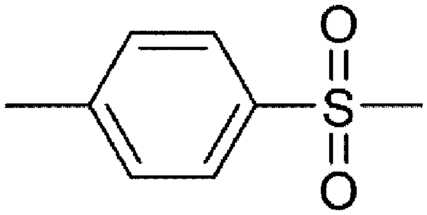

Formula (6)

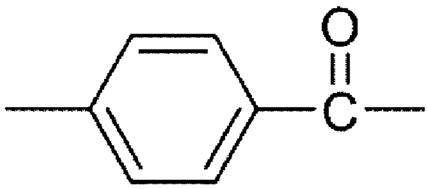

Formula (7)

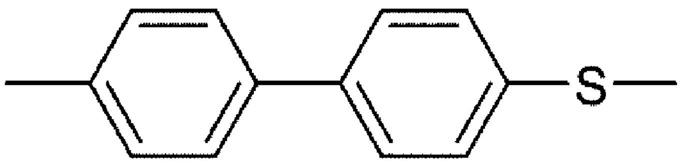

Formula (8)

in an amount of 30 mol% or less of a total amount with the structural sites represented by General Formulas (1) and (2) above. In particular, in the present disclosure, the structural sites represented by General Formulas (5) to (8) above are preferably in an amount of 10 mol% or less from the viewpoint of heat resistance and mechanical strength of the PAS resin (A). In the case where the PAS resin (A) contains the structural sites represented by General Formulas (5) to (8) above, their binding modes may be either a random copolymer or a block copolymer.

The PAS resin (A) may have a naphthyl sulfide bond or the like in its molecular structure but in an amount of preferably 3 mol% or less and particularly preferably 1 mol% or less relative to a total number of moles with other structural sites.

Physical properties of the PAS resin (A) are not particularly limited as long as the effects of the present invention are not impaired, but the physical properties are as follows.

Melt Viscosity (V6)

For a good balance between fluidity and mechanical strength, the melt viscosity (V6) measured at 300°C of the PAS resin (A) is in a range of 5 Pa·s or more and more preferably in a range of 10 Pa·s or more, and is preferably in a range of 45 Pa·s or less and more preferably in a range of 40 Pa·s or less. The melt viscosity (V6) of the PAS resin (A) is a melt viscosity value measured using a flow tester CFT-500D available from Shimadzu Corporation after holding the PAS resin (A) at 300°C, a load of 1.96 x $10^6$ Pa, and L/D = 10 (mm)/1 (mm) for 6 minutes.

Non-Newtonian Index

A non-Newtonian index of the PAS resin (A) used in the present disclosure is not particularly limited but is

preferably in a range from 0.90 or more to 2.00 or less. In the case of using a linear PAS resin, the non-Newtonian index is preferably from a range of 0.90 or more and more preferably a range of 0.95 or more to preferably a range of 1.50 or less and more preferably a range of 1.20 or less. Such a PAS resin (A) has excellent mechanical physical properties, fluidity, and abrasion resistance. In the present disclosure, the non-Newtonian index (N value) is a value determined by measuring a shear rate (SR) and a shear stress (SS) under conditions of a melting point of +20°C and a ratio of an orifice length (L) to an orifice diameter (D), L/D = 40, using a capillary rheometer, and calculating using the equation below. A non-Newtonian index (N value) closer to 1 indicates that the structure is closer to a linear structure, and a higher non-Newtonian index (N value) indicates that the structure is more branched.

[Math. 1]

$$SR = K \cdot SS^{N}$$

[wherein SR represents a shear rate ($sec^{-1}$), SS represents a shear stress ($dyn/cm^2$), and K represents a constant.]

Production Method

A method for producing the PAS resin (A) is not particularly limited, but examples include: (Production Method 1) a method of polymerizing a dihalogenoaromatic compound in the presence of sulfur and sodium carbonate and, if necessary, by adding a polyhalogenoaromatic compound or another copolymerization component; (Production Method 2) a method of polymerizing a dihalogenoaromatic compound in the presence of a sulfidizing agent and/or the like in a polar solvent and, if necessary, by adding a polyhalogenoaromatic compound or another copolymerization component; (Production Method 3) a method of self-condensing p-chlorothiophenol, if necessary, by adding another copolymerization component; and (Production Method 4) a method of melt-polymerizing a diiodoaromatic compound and elemental sulfur while the pressure is reduced in the presence of a polymerization inhibitor that may have a functional group, such as a carboxy group or an amino group. Among these methods, the method of (Production Method 2) is versatile and preferred. During the reaction, an alkali metal salt of a carboxylic acid and/or a sulfonic acid and/or an alkali hydroxide may be added to adjust the degree of polymerization. Among the methods of (Production Method 2) described above, the PAS resin (A) is particularly preferably obtained by a method for producing a PAS resin by introducing a hydrous sulfidizing agent into a mixture containing a heated organic polar solvent and a dihalogeno-aromatic compound at a rate at which water can be removed from a reaction mixture, adding the dihalogenoaromatic compound and the sulfidizing agent, as necessary together with a polyhalogenoaromatic compound, in the organic polar solvent, reacting them, and controlling an amount of water in the reaction system to a range of 0.02 to 0.5 mol per mol of the organic polar solvent (see JP 07-228699 A), or a method of adding a dihalogenoaromatic compound and, if necessary, a polyhalogenoaromatic compound or another copolymerization component, in the presence of a solid alkali metal sulfide and an aprotic polar organic solvent, and reacting an alkali metal hydrosulfide and an organic acid alkali metal salt while an amount of the organic acid alkali metal salt is controlled in a range of 0.01 to 0.9 mol per mol of a sulfur source and an amount of water in the reaction system is controlled in a range of 0.02 mol or less per mol of the aprotic polar organic solvent (see WO 2010/058713). Specific examples of the dihalogenoaromatic compound include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4'-dihalodiphenyl sulfone, 4,4'-dihalodiphenyl sulfoxide, 4,4'-dihalodiphenyl sulfide, and compounds having an alkyl group having from 1 to 18 carbon atoms on the aromatic ring of each of the above compounds. Examples of the polyhalogenoaromatic compound include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. In addition, the halogen atom contained in each of the above compounds is preferably a chlorine atom or a bromine atom.

A post-treatment method of the reaction mixture containing the PAS resin (A) obtained by the polymerization process is not particularly limited, but examples include: (Post-Treatment 1) a method in which, after completion of the polymerization reaction, first, the solvent is distilled off under reduced pressure or normal pressure from the reaction mixture as it is or after an acid or a base is added, then a solid after solvent distillation is washed once or twice or more with water, a reaction solvent (or an organic solvent with an equivalent solubility for a low-molecular-weight polymer), a solvent, such as acetone, methyl ethyl ketone, or an alcohol, and further neutralized, washed with water, filtered and dried; (Post-Treatment 2) a method in which, after completion of the polymerization reaction, a solvent (solvent that is soluble in the solvent used in the polymerization and is a poor solvent for at least PAS), such as water, acetone, methyl ethyl ketone, an alcohol, an ether, a halogenated hydrocarbon, an aromatic hydrocarbon, or an aliphatic hydrocarbon, is added to the

reaction mixture as a precipitating agent to precipitate solid products, such as PAS and an inorganic salt, and these are filtered, washed, and dried; (Post-Treatment 3) a method in which, after completion of the polymerization reaction, a reaction solvent (or an organic solvent with an equivalent solubility for a low-molecular-weight polymer) is added to the reaction mixture, the mixture is stirred and then filtered to remove a low-molecular-weight polymer, then the resultant is washed once or twice or more with a solvent, such as water, acetone, methyl ethyl ketone, or an alcohol, and then neutralized, washed with water, filtered, and dried; (Post-Treatment 4) a method in which, after completion of the polymerization reaction, water is added to the reaction mixture to wash with water, the resultant is filtered and as necessary acid-treated by adding an acid during water washing, and the resultant is dried; and (Post-Treatment 5) a method in which, after completion of the polymerization reaction, the reaction mixture is filtered, and as necessary, the resultant was washed once or twice or more with a reaction solvent, and the resultant is further washed with water, filtered, and dried.

In the post-treatment method, such as those exemplified in (Post-Treatment 1) to (Post-Treatment 5) described above, the PAS resin may be dried in vacuo or may be dried in air or in an atmosphere of an inert gas, such as nitrogen.

A blending amount of the PAS resin (A) in the PAS resin composition according to the present embodiment is not particularly limited as long as the effects of the present invention is not impaired, but the amount is from a range of preferably 20 parts by mass or more, more preferably 25 parts by mass or more, and even more preferably 30 parts by mass or more, to a range of preferably 55 parts by mass or less, more preferably 50 parts by mass or less, and even more preferably 45 parts by mass or less per 100 parts by mass of the resin composition. The resin composition blended with the PAS resin (A) in such a range exhibits good mechanical properties, which is thus preferred.

Flake Graphite (B)

The PAS resin composition according to the present embodiment contains flake graphite (B) as an essential component. "Flake" in the present disclosure means that the ratio of the thickness to the length of the long side of the plane orthogonal to the thickness direction is 1:5 or more. Using the flake graphite can increase the thermal conductivity without reducing physical properties, such as mechanical strength. If the graphite does not have a flake shape (e.g., if the shape is granular, plate-like, needle-like, or the like), both mechanical strength and thermal conductivity cannot be achieved at a high level.

Graphite is broadly classified into natural graphite and synthetic graphite, and either of these may be used in the present disclosure. The graphite used in the resin composition of the present disclosure preferably has a fixed carbon content of 95% or more and more preferably has a fixed carbon content of 98% or more. In addition, the crystallinity of the graphite is preferably 80% or more and more preferably 90% or more. Using the graphite having a large fixed carbon content and a high crystallinity can provide a resin composition having particularly good thermal conductivity.

The average particle size ($D_{50}$) of the flake graphite (B) used in the present disclosure is not particularly limited, but the average particle size ($D_{50}$) of the primary particles is preferably in a range of 5 [μm] or more and more preferably in a range of 15 [μm] or more, and preferably in a range of 300 [μm] or less, more preferably in a range of 200 [μm] or less, and even more preferably in a range of 100 [μm] or less. With the particle size of the flake graphite (B) in the above range, a resin composition with an excellent balance between fluidity and mechanical properties particularly during melting can be obtained. The average particle size is an average particle size ($D_{50}$) determined based on a particle size distribution measured according to a common procedure using a laser diffraction scattering particle size distribution analyzer (Microtrac MT3300EXII).

In the PAS resin composition of the present disclosure, a blending amount of the flake graphite (B) is not particularly limited as long as the effects of the present invention is not impaired, but the amount is from a range of preferably 30 parts by mass or more and more preferably 40 parts by mass or more to a range of preferably 70 parts by mass or less and more preferably 60 parts by mass or less per 100 parts by mass of the resin composition. The resin composition blended with the flake graphite (B) in such a range has good fluidity and provides excellent thermal conductivity of a molded article, which is thus preferred.

Electrically Conductive Carbon Black (C)

The PAS resin composition according to the present embodiment contains electrically conductive carbon black (C) as an essential component.

The electrically conductive carbon black (C) used in the present disclosure is carbon black (furnace carbon) having a specific surface area of 50 to 300 [$m^2/g$] produced by a furnace method. The specific surface area is in a range of 50 [$m^2/g$] or more, preferably in a range of 100 [$m^2/g$] or more, and more preferably in a range of 200 [$m^2/g$] or more. In addition, the specific surface area is preferably in a range of 300 [$m^2/g$] or less. With the specific surface area in such a range, a resin composition with an excellent balance between electrical conductivity and fluidity can be obtained. The specific surface area is a BET specific surface area measured using "Tristar II 3020" available from Shimadzu Corporation.

The primary particle size of the electrically conductive carbon black (C) used in the present disclosure is not particularly limited as long as the effects of the present invention are not impaired, but the primary particle size is preferably in a range of 20 to 50 [nm]. The electrically conductive carbon black (C) having a primary particle size in such a range provides an excellent balance between electrical conductivity and fluidity, which is thus preferred. The primary particle size is an average value obtained by measuring at least five or more samples by observation using a transmission electron microscope.

A blending amount of the electrically conductive carbon black (C) in the PAS resin composition of the present disclosure is from a range of preferably 1 part by mass or more and more preferably 3 parts by mass or more to a range of preferably 15 parts by mass or less and more preferably 10 parts by mass or less per 100 parts by mass of the resin composition. The resin composition blended with the electrically conductive carbon black (C) in such a range has good fluidity and provides excellent electrical conductivity of a molded article, which is thus preferred.

Optional Component

The PAS resin composition according to the present embodiment can be blended with a fibrous filler as an optional component in a range that does not impair the effects of the present invention. For these fibrous fillers, any known and commonly used material that does not impair the effects of the present invention can also be used; for example, glass fibers, carbon fibers, silane glass fibers, ceramic fibers, aramid fibers, metal fibers, or the like can be used. In the case of blending a fibrous filler, its blending amount is preferably 50 parts by mass or less and more preferably 30 parts by mass or less per 100 parts by mass of the flake graphite (B). The PAS resin composition blended with a fibrous filler in such a range can provide a molded article having even better mechanical properties.

The PAS resin composition according to the present embodiment can be blended with a non-fibrous filler as an optional component in a range that does not impair the effects of the present invention. Examples include fillers with various shapes, such as a plate shape and a spherical shape. Specifically, a non-fibrous filler, such as glass beads, glass flakes, calcium carbonate, magnesium carbonate, calcium sulfate, barium sulfate, clay, pyrophyllite, bentonite, sericite, mica, talc, attapulgite, ferrite, calcium silicate, zeolite, or boehmite, can be used.

In the present disclosure, the non-fibrous filler is not an essential component, but in the case of blending, its blending amount is not particularly limited as long as the effects of the present invention are not impaired. The blending amount of an additional filler is, for example, from a range of preferably 1 part by mass or more and more preferably 5 parts by mass or more to a range of preferably 600 parts by mass or less and more preferably 200 parts by mass or less per 100 parts by mass of the PAS resin (A). The resin composition blended with an additional filler in such a range exhibits good moldability and provides a molded article having excellent mechanical properties, which is thus preferred.

The PAS resin composition according to the present embodiment can be blended with a silane coupling agent as an optional component as necessary. The silane coupling agent is not particularly limited as long as the effects of the present invention are not impaired, but preferred examples include silane coupling agents having a functional group reactive with a carboxy group, such as an epoxy group, an isocyanato group, an amino group, or a hydroxy group. Examples of such a silane coupling agent include epoxy group-containing alkoxysilane compounds, such as γ-glycidoxypropyltrimethoxysilane, γ-glycidoxypropyltriethoxysilane, and β-(3,4-epoxycyclohexyl)ethyltrimethoxysilane; isocyanato group-containing alkoxysilane compounds, such as γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane; amino group-containing alkoxysilane compounds, such as γ-(2-aminoethyl)aminopropylmethyldimethoxysilane, γ-(2-aminoethyl)aminopropyltrimethoxysilane, and γ-aminopropyltrimethoxysilane; and hydroxy group-containing alkoxysilane compounds, such as γ-hydroxypropyltrimethoxysilane and γ-hydroxypropyltriethoxysilane.

In the present disclosure, the silane coupling agent is not an essential component, but in the case of blending, its blending amount is not particularly limited as long as the effects of the present invention are not impaired, but the amount is in a range from preferably 0.01 parts by mass or more and more preferably 0.1 parts by mass or more to preferably 10 parts by mass or less and more preferably 5 parts by mass or less per 100 parts by mass of the PAS resin (A). The resin composition blended with the silane coupling agent in such a range has good moldability, in particular, good mold releasability, and improves mechanical strength of a molded article, which is thus preferred.

The PAS resin composition according to the present embodiment can be blended with a thermoplastic elastomer as an optional component as necessary. Examples of the thermoplastic elastomer include a polyolefin-based elastomer, a fluorine-based elastomer, or a silicone-based elastomer. Among these, preferred examples include a polyolefin-based elastomer. In the case of blending an elastomer of these, its blending amount is not particularly limited as long as the effects of the present invention are not impaired but is in a range from preferably 0.01 parts by mass or more and more preferably 0.1 parts by mass or more to preferably 10 parts by mass or less and more preferably 5 parts by mass or less per 100 parts by mass of the PAS resin (A). Blending the thermoplastic elastomer in such a range improves impact resistance of the resulting PAS resin composition, which is thus preferred.

Examples of the polyolefin-based elastomer include a homopolymer of an α-olefin, a copolymer of two or more α-olefins, and a copolymer of one or two or more α-olefins and a vinyl polymerizable compound having a functional group. Examples of the α-olefin include α-olefins with carbon atoms in a range from 2 or more to 8 or less, such as ethylene, propylene, and 1-butene. In addition, examples of the functional group include a carboxy group, an acid anhydride group (-C(=O)OC(=O)-), an epoxy group, an amino group, a hydroxy group, a mercapto group, an isocyanate group, and an oxazoline group. Furthermore, examples of the vinyl polymerizable compound having a functional group include one or two or more of vinyl acetate; α,β-unsaturated carboxylic acids, such as (meth)acrylic acid; alkyl esters of α,β-unsaturated carboxylic acids, such as methyl acrylate, ethyl acrylate, and butyl acrylate; metal salts of α,β-unsaturated carboxylic acids, such as ionomers (examples of the metal include alkali metals, such as sodium; alkaline earth metals, such as calcium; and zinc); glycidyl esters of α,β-unsaturated carboxylic acids, such as glycidyl methacrylate; α,β-unsaturated dicarboxylic acids, such as maleic acid, fumaric acid, and itaconic acid; and derivatives (monoesters, diesters, and acid anhydrides) of the α,β-unsaturated dicarboxylic acids. One of the thermoplastic elastomers described above may be used individually, or two or more may be used in combination.

Furthermore, the PAS resin composition according to the present embodiment can be further appropriately blended with a synthetic resin as an optional component according to the application in addition to the components described above, such as a polyester resin, a polyamide resin, a polyimide resin, a poly(ether imide) resin, a polycarbonate resin, a poly(phenylene ether) resin, a polysulfone resin, a poly(ether sulfone) resin, a poly(ether ether ketone) resin, a poly(ether ketone) resin, a polyarylate resin, a polyethylene resin, a polypropylene resin, a poly(tetrafluoroethylene) resin, a poly(difluoroethylene) resin, a polystyrene resin, an ABS resin, an epoxy resin, a phenol resin, a urethane resin, or a liquid crystal polymer (hereinafter referred to simply as a synthetic resin). In particular, blending a fluorine-based resin further improves slidability, which is thus preferred.

In the present disclosure, the synthetic resin is not an essential component, but in the case of blending, a proportion of the blending is not particularly limited as long as the effects of the present invention are not impaired. In addition, the proportion varies according to each purpose and cannot be unconditionally specified, but the proportion of the synthetic resin to be blended in the resin composition according to the present disclosure is, for example, in a range of 5 parts by mass or more and approximately in a range of 15 parts by mass or less per 100 parts by mass of the PAS resin (A). In other words, the ratio of the PAS resin to the total of the PAS resin (A) and the synthetic resin is preferably in a range of (100/115) or more and more preferably in a range of (100/105) or more on a mass basis.

In addition, the PAS resin composition according to the present embodiment may be additionally blended with a known and commonly used additive as an optional component as necessary, such as a colorant, an antistatic agent, an antioxidant, a heat-resistant stabilizer, an ultraviolet stabilizer, an ultraviolet absorber, a foaming agent, a flame retardant, a flame retardant aid, a rust inhibitor, and a mold release agent (such as a metal salt or an ester of a fatty acid having from 18 to 30 carbon atoms including stearic acid or montanic acid; or a polyolefin-based wax, such as polyethylene). An additive of these is not an essential component and is used by appropriately adjusting the amount according to the purpose and/or application so as not to impair the effects of the present invention, for example, preferably in a range of 0.01 parts by mass or more and in a range of preferably 1000 parts by mass or less, more preferably 100 parts by mass or less, and even more preferably 10 parts by mass or less per 100 parts by mass of the PAS resin (A).

The PAS resin composition according to the present embodiment has a melt viscosity (R) in a range of 100 to 400 [Pa·s]. The melt viscosity (R) of the resin composition in such a range can be achieved by adjusting the blending amounts of the essential components, the PAS resin (A), the flake graphite (B), and the electrically conductive carbon black (C), and the melt viscosity (V6) of the PAS resin (A). More specifically, increase in the blending amount of the electrically conductive carbon black (C) tends to increase the melt viscosity (R) of the resin composition. Thus, the melt viscosity (R) can be adjusted by using a PAS resin (A) having a lower melt viscosity (V6). With a melt viscosity (R) in such a range, the resin composition has good fluidity during melt kneading and molding, and a molded article with excellent appearance can be obtained. The melt viscosity (R) of the resin composition in the present disclosure is another index differing in the measurement method from the melt viscosity (V6) of the PAS resin (A). The melt viscosity (R) of the resin composition in the present disclosure is a value measured by a method described in Examples at a temperature of 350°C, a shear rate of 1216 [$s^{-1}$], and a ratio of an orifice length (L) to an orifice diameter (D), L/D = 40, using a capillary rheometer.

The PAS resin composition according to the present embodiment has excellent thermal conductivity. The value of the thermal conductivity is not particularly limited but is preferably 1.5 [W/m·K] or more and more preferably 2.0 [W/m·K] or more. The PAS resin composition having a thermal conductivity in such a range can efficiently release (radiate) frictional heat generated during sliding, heat due to heat generation in an adjacent part, and the like, and thus can prevent deterioration, such as decrease in mechanical properties of a molded article. In addition, the PAS resin composition having a thermal conductivity in such a range can also prevent thermal degradation of an adjacent part. The thermal conductivity in the present disclosure is a value obtained by measuring the thickness direction of a molded article by a method described in Examples in accordance with JIS R 1611 "Methods for Measuring Thermal Diffusivity, Specific Heat Capacity, and Thermal Conductivity of Fine Ceramics by Flash Method".

The PAS resin composition according to the present embodiment has excellent electrical conductivity. The value

of the electrical conductivity is not particularly limited but is preferably 5 [S/cm] or more, more preferably 7 [S/cm] or more, and even more preferably 10 [S/cm] or more. The resin composition having an electrical conductivity in such a range has excellent electrical conductivity, and thus a molded article can exhibit an excellent electromagnetic wave shielding effect. The electrical conductivity in the present disclosure is a value calculated from a volume resistance value measured by a method described in Examples.

Method for Producing PAS Resin Composition

A method for producing a PAS resin composition according to the present embodiment is a method for producing a PAS resin composition, the method including blending a PAS resin (A), flake graphite (B), and electrically conductive carbon black (C), and melt-kneading the mixture at a temperature equal to or higher than a melting point of the PAS resin, and is characterized in that

the PAS resin (A) has a melt viscosity (V6) in a range of 5 to 45 [Pa·s];
the electrically conductive carbon black (C) is furnace carbon black having a specific surface area of 50 to 300 [$m^2$/g]; a content of the flake graphite (B) is 100 to 230 parts by mass, and a content of the electrically conductive carbon black (C) is 1 to 30 parts by mass, per 100 parts by mass of the PAS resin (A); and
the PAS resin composition has a melt viscosity (R) in a range of 100 to 400 [Pa·s]. The method will be described in detail below.

The method for producing a PAS resin composition according to the present embodiment includes blending the essential components and melt-kneading in a temperature range of a melting point of the PAS resin (A) or higher. More specifically, the PAS resin composition according to the present embodiment contains each essential component and as necessary an additional optional component. The method for producing the resin composition used in the present disclosure is not particularly limited, but examples include a method of blending the essential components and as necessary an optional component, and melt-kneading, more specifically, a method of uniformly dry-mixing the components with a tumbler, a Henschel mixer, or the like as necessary, then feeding the mixture into a twin-screw extruder, and melt-kneading the mixture.

The components can be melt-kneaded by heating the components to a temperature range where the resin temperature is a melting point of the PAS resin (A) or higher, preferably a temperature range of the melting point + 10°C or higher, more preferably a temperature range from the melting point + 10°C or higher and even more preferably the melting point + 20°C or higher to preferably the melting point + 100°C or lower and more preferably the melting point + 50°C or lower.

The melt-kneading machine is preferably a twin-screw kneading extruder from the viewpoints of dispersibility and productivity. For example, the components are preferably melt-kneaded while a discharge amount of the resin component in a range of 5 to 500 (kg/hr) and a screw rotation speed in a range of 50 to 500 (rpm) are appropriately adjusted, and the components are more preferably melt-kneaded under the condition that a ratio (discharge amount/screw rotation speed) is in a range of 0.02 to 5 (kg/hr/rpm). In addition, the addition of the components to the melt-kneading machine and the mixing may be performed simultaneously or separately. For example, in the case of adding the graphite (B) of the essential components and as necessary an additional fibrous filler among the components, they are preferably fed from a side feeder of the twin-screw kneading extruder into the extruder from the viewpoint of dispersibility. For the position of the side feeder, a ratio of a distance from a resin feeding portion (top feeder) of the extruder to the side feeder to a total length of a screw of the twin-screw kneading extruder is preferably 0.1 or more and more preferably 0.3 or more. In addition, the ratio is preferably 0.9 or less and more preferably 0.7 or less.

The PAS resin composition according to the present disclosure obtained by thus melt-kneading is a molten mixture containing the essential components, optional components added as necessary, and components derived from them. Thus, the PAS resin composition of the present disclosure has a morphology in which the PAS resin (A) forms a continuous phase and the other essential components and an optional component are dispersed. After the melt-kneading, the PAS resin composition according to the present disclosure is preferably preliminarily dried as necessary by a known method, for example, in a temperature range of 100 to 150°C after extrusion-molding the resin composition in a molten state into a strand shape and then processing into a form, such as pellets, chips, granules, or powder.

PAS Resin Molded Article and Method for Producing PAS Resin Molded Article

A molded article according to the present embodiment is formed by melt-molding the PAS resin composition. In addition, the method for producing the molded article according to the present embodiment includes melt-molding the PAS resin composition. Thus, the molded article according to the present embodiment has a morphology in which the PAS resin (A) forms a continuous phase and the other essential components and an optional component are dispersed. The PAS

resin composition has such a morphology and thus provides a molded article having excellent thermal conductivity and mechanical strength.

The PAS resin composition according to the present embodiment can be subjected to various types of molding, such as injection molding, compression molding, extrusion molding of a composite, a sheet, a pipe, or the like, pultrusion molding, blow molding, or transfer molding, but is particularly suitable for injection molding because of its excellent mold releasability. In the case of molding by injection molding, various molding conditions are not particularly limited, and the PAS composition can be usually molded by a common method. For example, after undergoing a process of melting the PAS resin composition in an injection molding machine in a temperature range where the resin temperature is a melting point of the PAS resin (A) or higher, preferably in a temperature range of the melting point + 10°C or higher, more preferably in a temperature range of the melting point + 10°C to the melting point + 100°C, and even more preferably in a temperature range of the melting point + 20 to the melting point + 50°C, the PAS resin composition (A) is injected from a resin discharge port into a mold and molded. At this time, a mold temperature is also set in a known temperature range, for example, from room temperature (23°C) to 300°C and preferably from 130 to 190°C.

The method for producing the molded article according to the present embodiment may include subjecting the molded article to annealing treatment. For the annealing treatment, optimum conditions are selected according to the application, shape, or the like of the molded article, but the annealing temperature is in a temperature range of the glass transition temperature of the PAS resin (A) or higher, preferably in a temperature range of the glass transition temperature + 10°C or higher, and more preferably in a temperature range of the glass transition temperature + 30°C or higher. On the other hand, the annealing temperature is preferably in a range of 260°C or lower and more preferably in a range of 240°C or lower. The annealing time is not particularly limited but is preferably in a range of 0.5 hours or more and more preferably in a range of 1 hour or more. On the other hand, the annealing time is preferably in a range of 10 hours or less and more preferably in a range of 8 hours or less. The annealing treatment in such ranges not only reduces the strain of the resulting molded article and improves the crystallinity of the resin but also further improves the thermal conductivity, the mechanical properties, and the fuel barrier properties, which is thus preferred. The annealing treatment may be performed in air but is preferably performed in an inert gas, such as nitrogen gas.

The PAS resin molded article of the present disclosure is characterized by having excellent thermal conductivity and electrical conductivity and thus is particularly suitable for a member (heat radiating member) that efficiently conducts and releases heat and the like. Specifically, the PAS resin molded article can be suitably used for an in-vehicle heat radiating member, such as a heat exchanger and a heat radiating plate; a heat radiating member for electronic parts; and the like. In addition, the molded article of the present disclosure is not only a heat radiating member but also can be an ordinary resin molded article as follows. Examples of the ordinary resin molded article include electrical/electronic parts represented by protective/supporting members for box-type electrical/electronic part integrated modules, a plurality of individual semiconductors or modules, sensors, LED lamps, connectors, sockets, resistors, relay cases, switches, coil bobbins, capacitors, variable condenser cases, optical pickups, oscillators, various terminal plates, transformers, plugs, printed boards, tuners, speakers, microphones, headphones, small motors, magnetic head bases, power modules, terminal blocks, semiconductors, liquid crystals, FDD carriages, FDD chassis, motor brush holders, parabolic antennas, and computer-related parts; household and office electrical product parts represented by VTR parts, television parts, irons, hair driers, rice cooker parts, microwave oven parts, acoustic parts, audio-visual equipment parts (such as audio-laser discs, compact discs, DVD discs, and Blu-ray Discs), lighting parts, refrigerator parts, air conditioner parts, typewriter parts, word processor parts, or water-area equipment parts (such as hot water amount and temperature sensors for hot water suppliers and bathes); machine-related parts represented by office computer-related parts, telephone-related parts, facsimile-related parts, copier-related parts, cleaning jigs, motor parts, writers, and typewriters: parts related to optical equipment and precision machine represented by microscopes, binoculars, cameras, and watches; and automobile/-vehicle-related parts, such as alternator terminals, alternator connectors, brush holders, slip rings, IC regulators, potentiometer bases for light dimmers, relay blocks, inhibitor switches, various valves (such as exhaust gas valves), fuel-related/exhaust system/intake system various pipes, air intake nozzle snorkels, intake manifolds, engine cooling water joints, carburetor main bodies, carburetor spacers, exhaust gas sensors, cooling water sensors, oil temperature sensors, brake pad wear sensors, throttle position sensors, crankshaft position sensors, temperature sensors, air flow meters, brake pad abrasion sensors, thermostat bases for air conditioners, warm air flow control valves, brush holders for radiator motors, water pump impellers, turbine vanes, wiper motor-related parts, distributors, starter switches, ignition coils and their bobbins, motor insulators, motor rotors, motor cores, starter relays, wire harnesses for transmissions, window washer nozzles, air conditioner panel switch substrates, coils for fuel-related electromagnetic valves, connectors for fuses, horn terminals, electrical part insulating plates, step motor rotors, lamp sockets, lamp reflectors, lamp housings, brake pistons, solenoid bobbins, engine oil filters, and ignition device cases. The molded article is also applicable to various other applications.

Examples

The present disclosure will be described using examples and comparative examples. Hereinafter, "%" and "part" are based on mass unless otherwise specified.

Referential Example, Examples 1 to 5, and Comparative Examples 1 to 4

Each material was blended according to the composition component and blending amount described in Tables 1 and 2. Thereafter, these blended materials were fed into a vented twin-screw extruder "TEX-30α (product name)" available from The Japan Steel Works, Ltd. and melt-kneaded at a resin component discharge rate of 25 kg/hr, a screw rotation speed of 200 rpm, and a set resin temperature of 330°C, and pellets of a resin composition were obtained. The raw material components were uniformly mixed in a tumbler in advance and fed from a top feeder. The resulting pellets of the resin composition were dried in a gear oven at 140°C for 2 hours and then injection-molded to prepare various test pieces, and the following tests were performed.

Evaluations

(1) Evaluation of Fluidity during Melt-Kneading

The fluidity was evaluated from a kneading torque when the resin composition was produced by melt-kneading with a vented twin-screw extruder by the method described above. An example where the kneading torque was less than 1.2 times the kneading torque of Referential Example and the resin composition was obtained was evaluated as ○, and an example where the kneading torque was 1.2 times or more the kneading torque of Referential Example and thus was determined to be impossible to be processed by melt kneading was evaluated as ×. The evaluation results are shown in Tables 1 and 2.

(2) Measurement of Thermal Conductivity (Xenon Flash Method)

The resulting pellets of the resin composition were supplied to an injection molding machine (SE-75D-HP) available from Sumitomo Heavy Industries, Ltd., the machine set at a cylinder temperature of 350°C, and injection-molded using a mold for molding an ISO D2 sheet, the mold temperature-controlled at a mold temperature of 150°C, and an ISO D2 sheet was obtained. The resulting sheet was cut into a 10 mm x 10 mm x 2 mmt piece, and this was used as a test piece to measure the thermal conductivity (W/m·K) of the molded article in a thickness direction in accordance with JIS R 1611 "Methods for Measuring Thermal Diffusivity, Specific Heat Capacity, and Thermal Conductivity of Fine Ceramics by Flash Method". The measurement results are shown in Tables 1 and 2.

(3) Evaluation of Tensile Properties

The resulting pellets of the resin composition were supplied to an injection molding machine (SE-75D-HP) available from Sumitomo Heavy Industries, Ltd., the machine set at a cylinder temperature of 350°C, and injection-molded using a mold for molding an ISO Type 1A dumbbell piece, the mold temperature-controlled at a mold temperature of 150°C, and an ISO Type-A dumbbell piece was obtained. The dumbbell piece was prepared by injecting the resin from one point gate so that the test piece included no weld. The tensile strength of the resulting dumbbell piece was measured by a measurement method in accordance with ISO 527-1 and 2. The measurement results are shown in Tables 1 and 2.

(4) Measurement of Electrical Conductivity

The electrical conductivity was evaluated from the volume resistivity of the resulting resin composition. For the volume resistivity, the volume resistivity of each test piece under conditions of a room temperature of 21°C and a humidity of 67 RH% was measured using "Loresta AX MCP-T370" available from Nitto Seiko Analytech Co., Ltd. in accordance with JIS K 7194 "Test Method for Resistivity of Electrically Conductive Plastics by Four-Probe Method", and the electrical conductivity was calculated from the obtained value. For the test piece, the resin composition obtained in each of the examples and comparative examples was supplied to an injection molding machine (SE-75D-HP) available from Sumitomo Heavy Industries, Ltd., the machine set at a cylinder temperature of 350°C, and injection-molded using a mold for molding a plate (80 mm x 50 mm x 2 mmt), the mold temperature-controlled at a mold temperature of 150°C, and the resulting molded article was used. The measurement results are shown in Tables 1 and 2.

(5) Measurement of Melt Viscosity (R)

For the resin composition obtained in each of the examples and comparative examples, the melt viscosity (R) after holding at 350°C, a shear rate of 1216 $s^{-1}$, and L/D = 40 (mm)/1 (mm) for 5 minutes was measured using "Capillograph 1D" available from Toyo Seiki Seisaku-sho, Ltd. The measurement results are shown in Tables 1 and 2 as "Melt viscosity".

[Table 1]

| | | | Referential Example | Example 1 | Example 2 | Example 3 | Example 4 | Example 5 |
|---|---|---|---|---|---|---|---|---|
| Composition | A-1 | Parts by mass | 100 | 100 | 100 | 100 | 100 | 100 |
| | B-1 | Parts by mass | 220 | 171 | 159 | 176 | 119 | 171 |
| | C-1 | Parts by mass | | 12 | 24 | 6 | 10 | |
| | C-2 | Parts by mass | | | | | | 12 |
| | c-3 | Parts by mass | | | | | | |
| | c-4 | Parts by mass | | | | | | |
| | D-1 | Parts by mass | 9 | 9 | 9 | 9 | 9 | 9 |
| Evaluations | Fluidity | - | - | ○ | ○ | ○ | ○ | ○ |
| | Tensile strength | MPa | 45 | 60 | 52 | 62 | 69 | 61 |
| | Thermal conductivity | W/m·K | 3 | 2.2 | 1.9 | 2.3 | 1.6 | 2.1 |
| | Electrical conductivity | S/cm | 3.8 | 13.3 | 19.2 | 7.7 | 9.1 | 10.0 |
| | Melt viscosity | Pa·s | 295 | 220 | 360 | 180 | 192 | 215 |

[Table 2]

| | | | Comparative Example 1 | Comparative Example 2 | Comparative Example 3 | Comparative Example 4 |
|---|---|---|---|---|---|---|
| Composition | A-1 | Parts by mass | 100 | 100 | 100 | 100 |
| | B-1 | Parts by mass | 171 | 171 | 138 | 245 |
| | C-1 | Parts by mass | | | 44 | |
| | C-2 | Parts by mass | | | | |
| | c-3 | Parts by mass | 12 | | | |
| | c-4 | Parts by mass | | 3 | | |
| | D-1 | Parts by mass | 9 | 9 | 9 | |
| Evaluations | Fluidity | - | × | ○ | × | ○ |
| | Tensile strength | MPa | - | 64 | - | 37 |
| | Thermal conductivity | W/m·K | - | 2.4 | - | 4.1 |
| | Electrical conductivity | S/cm | - | 7.1 | - | 3.6 |
| | Melt viscosity | Pa·s | - | 527 | - | 310 |

- PAS resin (A)
  A-1: PPS resin (melt viscosity (V6) 15 [Pa·s])

- Flake graphite (B)
  B-1: "Flake Graphite D-1" available from Nishimura Graphite Co., Ltd., average particle size ($D_{50}$) 52.9 [μm]

- Electrically conductive carbon black (C)

  C-1: furnace carbon black, specific surface area 225 [$m^2/g$], primary particle size 25 [nm]
  C-2: furnace carbon black, specific surface area 165 [$m^2/g$], primary particle size 21 [nm]
  c-3: "Ketjen Black EC600JD" available from Lion Specialty Chemicals Co., Ltd., specific surface area 1270 [$m^2/g$], primary particle size 34 [nm]
  c-4: "Lionite CB" available from Lion Specialty Chemicals Co., Ltd., specific surface area 1052 [$m^2/g$], primary particle size 40 [nm]

- Carbon fibers (D)
  D-1: pitch-based carbon fibers, cut length 0.2 [mm], fiber diameter 11 [μm], tensile elastic modulus 900 [GPa], no sizing agent

Production Example 1: Production of PPS Resin (A-1)

[Step 1]

In a 150-L autoclave equipped with a stirring blade and connected with a pressure gauge, a thermometer, a condenser, a decanter, and a rectification column, 35.868 parts by mass (244 parts by mol) of p-dichlorobenzene (p-DCB), 3.420 parts by mass (34.5 parts by mol) of NMP, 27.300 parts by mass (230 parts by mol as NaSH) of a 47.23 mass% NaSH aqueous solution, and 18.533 parts by mass (228 parts by mol as NaOH) of a 49.21 mass% NaOH aqueous solution were placed. The temperature was raised to 173°C over 5 hours under a nitrogen atmosphere with stirring to distill off 27.300 parts by mass of water, and then the autoclave was sealed. The p-DCB distilled off by azeotropy during dehydration was separated by the decanter and returned to the autoclave at any time. A fine particulate anhydrous sodium sulfide composition was dispersed in p-DCB in the autoclave after completion of the dehydration. The NMP content in this composition was 0.079 parts by mass (0.8 parts by mol). This showed that 98 mol% (33.7 parts by mol) of NMP placed was hydrolyzed into a sodium salt of a ring-opened form of NMP (4-(methylamino)butyric acid) (hereinafter abbreviated as "SMAB"). The SMAB amount in the autoclave was 0.147 parts by mol per mol of sulfur atoms present in the autoclave. The theoretical dehydration amount when all NaSH and NaOH placed are converted to anhydrous $Na_2S$ is 27.921 parts by mass. This showed that 0.609 parts by mass (33.8 parts by mol) of 0.878 parts by mass (48.8 parts by mol) of the residual water amount in the autoclave was consumed by the hydrolysis reaction between NMP and NaOH and was not present as water in the autoclave, and that the remaining 0.269 parts by mass (14.9 parts by mol) remained in the form of water or crystal water in the autoclave. The amount of water in the autoclave was 0.065 mol per mol of sulfur atoms present in the autoclave.

[Step 2]

After completion of the dehydration step, the internal temperature was lowered to 160°C, 46.343 parts by mass (467.5 parts by mol) of NMP was placed, and the temperature was raised to 185°C. The amount of water in the autoclave was 0.025 mol per mol of NMP placed in step 2. When the gauge pressure reached 0.00 MPa, the valve connected to the rectification column was opened, and the internal temperature was raised to 200°C over 1 hour. At this time, the temperature at the outlet of the rectification column was controlled to 110°C or lower by cooling and valve opening. The mixed vapor of p-DCB and water distilled off was condensed by the condenser and separated by the decanter, and p-DCB was returned to the autoclave. The amount of water distilled off was 0.228 parts by mass (12.7 parts by mol).

[Step 3]

The amount of water in the autoclave at the start of step 3 was 0.041 parts by mass (2.3 parts by mol), which was 0.005 mol per mol of NMP placed in step 2 and 0.010 mol per mol of sulfur atoms present in the autoclave. The SMAB amount in the autoclave was 0.147 mol per mol of sulfur atoms present in the autoclave as in step 1. Next, the internal temperature was raised from 200°C to 230°C over 3 hours, and the mixture was stirred at 230°C for 1 hour. Then, the temperature was raised to 250°C, and the mixture was stirred for 1 hour. The gauge pressure when the internal temperature was 200°C was 0.04 MPa, and the final gauge pressure was 0.40 MPa. After cooling, 0.650 parts by mass of the resulting slurry was poured into 3 parts by mass (3 parts by L) of water, and the mixture was stirred at 80°C for 1 hour and then filtered. This cake was again stirred in 3 parts by mass (3 parts by L) of warm water for 1 hour, washed, and then filtered. This operation was repeated four times. To this cake, 3 parts by mass (3 parts by L) of warm water was added, and acetic acid was added to adjust to a pH of 4.0. The mixture was then stirred for 1 hour, washed, and then filtered. This cake was again stirred in 3 parts by mass (3 parts by L) of warm water for 1 hour, washed, and then filtered. This operation was repeated twice. The product was dried overnight at 120°C using a hot air dryer, and a white powdery PPS resin (A-1) was obtained. The melt viscosity (V6) of this polymer was 15 Pa·s. The non-Newtonian index was 1.07.

Tables 1 and 2 showed that the molded articles composed of the resin composition of the examples had excellent fluidity and high thermal conductivity and electrical conductivity compared with those of the comparative examples.

## Claims

1. A poly(arylene sulfide) resin composition comprising a poly(arylene sulfide) resin (A), flake graphite (B), and electrically conductive carbon black (C) as essential components, wherein

    the poly(arylene sulfide) resin (A) has a melt viscosity (V6) in a range of 5 to 45 [Pa·s];
    the electrically conductive carbon black (C) is furnace carbon black having a specific surface area of 50 to 300 [$m^2$/g];
    a content of the flake graphite (B) is 100 to 230 parts by mass, and a content of the electrically conductive carbon

black (C) is 1 to 30 parts by mass, per 100 parts by mass of the poly(arylene sulfide) resin (A); and
the poly(arylene sulfide) resin composition has a melt viscosity (R) in a range of 100 to 400 [Pa·s]
(wherein the melt viscosity (V6) is a value measured using a flow tester after holding at 300°C, a load of 1.96 x $10^6$ [Pa], and L/D = 10 [mm]/1 [mm] for 6 minutes, and the melt viscosity (R) is a value measured using a capillary rheometer at a temperature of 350°C and a shear rate of 1216 [$s^{-1}$]).

2. The poly(arylene sulfide) resin composition according to claim 1, further comprising carbon fibers (D) in an amount of 1 to 60 parts by mass per 100 parts by mass of the poly(arylene sulfide) resin (A).

3. The poly(arylene sulfide) resin composition according to claim 1 or 2, wherein the flake graphite (B) has an average particle size ($D_{50}$) determined according to the method of the description in a range of 1 to 100 [μm].

4. The poly(arylene sulfide) resin composition according to claim 1 or 2, wherein the electrically conductive carbon black (C) has a primary particle size in a range of 20 to 50 [nm]
(wherein the primary particle size is a value measured using a transmission electron microscope).

5. A poly(arylene sulfide) resin molded article produced by melt-molding the resin composition described in claim 1 or 2.

6. A method for producing a poly(arylene sulfide) resin composition, the method comprising blending a poly(arylene sulfide) resin (A), flake graphite (B), and electrically conductive carbon black (C) as essential components, and melt-kneading the mixture at a temperature equal to or higher than a melting point of the poly(arylene sulfide) resin, wherein

the poly(arylene sulfide) resin (A) has a melt viscosity (V6) in a range of 5 to 45 [Pa·s];
the electrically conductive carbon black (C) is furnace carbon black having a specific surface area of 50 to 300 [$m^2/g$];
a content of the flake graphite (B) is 100 to 230 parts by mass, and a content of the electrically conductive carbon black (C) is 1 to 30 parts by mass, per 100 parts by mass of the poly(arylene sulfide) resin (A); and
the poly(arylene sulfide) resin composition has a melt viscosity (R) in a range of 100 to 400 [Pa·s]
(wherein the melt viscosity (V6) is a value measured using a flow tester after holding at 300°C, a load of 1.96 x $10^6$ [Pa], and L/D = 10 [mm]/1 [mm] for 6 minutes, and the melt viscosity (R) is a value measured using a capillary rheometer at a temperature of 350°C and a shear rate of 1216 [$s^{-1}$]).

7. The method for producing a poly(arylene sulfide) resin composition according to claim 6, the method further comprising blending carbon fibers (D) in an amount of 1 to 60 parts by mass per 100 parts by mass of the poly(arylene sulfide) resin (A).

8. The method for producing a poly(arylene sulfide) resin composition according to claim 6 or 7, wherein the flake graphite (B) has an average particle size ($D_{50}$) determined according to the method of the description in a range of 1 to 100 [μm].

9. The method for producing a poly(arylene sulfide) resin composition according to claim 6 or 7, wherein the electrically conductive carbon black (C) has a primary particle size in a range of 20 to 50 [nm]
(wherein the primary particle size is a value measured using a transmission electron microscope).

10. A method for producing a poly(arylene sulfide) resin molded article, the method comprising:

producing a resin composition by the method described in claim 6 or 7; and
melt-molding the resin composition.

## Patentansprüche

1. Poly(arylensulfid)-Harzzusammensetzung, umfassend ein Poly(arylensulfid)-Harz (A), Flockengraphit (B) und elektrisch leitfähigen Ruß (C) als wesentliche Bestandteile, wobei

das Poly(arylensulfid)-Harz (A) eine Schmelzviskosität (V6) im Bereich von 5 bis 45 [Pa·s] aufweist;
der elektrisch leitfähige Ruß (C) Ofenruß mit einer spezifischen Oberfläche von 50 bis 300 [$m^2/g$] ist;
der Gehalt an Flockengraphit (B) 100 bis 230 Masseteile und der Gehalt an elektrisch leitfähigem Ruß (C) 1 bis 30

Masseteile pro 100 Masseteile des Poly(arylensulfid)-Harzes (A) beträgt; und
die Poly(arylensulfid)-Harzzusammensetzung weist eine Schmelzviskosität (R) im Bereich von 100 bis 400 [Pa·s] auf
(wobei die Schmelzviskosität (V6) ein Wert ist, der mit einem Fließprüfgerät nach einer Haltezeit bei 300 °C, einer Belastung von 1,96 $\times$ $10^6$ [Pa] und L/D = 10 [mm]/1 [mm] gemessen wurde, und die Schmelzviskosität (R) ein Wert ist, der mit einem Kapillarrheometer bei einer Temperatur von 350 °C und einer Schergeschwindigkeit von 1216 [$s^{-1}$] gemessen wurde).

**2.** Poly(arylensulfid)-Harzzusammensetzung nach Anspruch 1, die ferner Kohlenstofffasern (D) in einer Menge von 1 bis 60 Masseteilen pro 100 Masseteile des Poly(arylensulfid)-Harzes (A) enthält.

**3.** Poly(arylensulfid)-Harzzusammensetzung nach Anspruch 1 oder 2, wobei der Flockengraphit (B) eine durchschnittliche Partikelgröße ($D_{50}$) aufweist, die gemäß dem in der Beschreibung beschriebenen Verfahren bestimmt wird und im Bereich von 1 bis 100 [$\mu$m] liegt.

**4.** Poly(arylensulfid)-Harzzusammensetzung nach Anspruch 1 oder 2, wobei der elektrisch leitfähige Ruß (C) eine Primärpartikelgröße im Bereich von 20 bis 50 [nm] aufweist
(wobei die Primärpartikelgröße ein unter Verwendung eines Transmissionselektronenmikroskops gemessener Wert ist).

**5.** Formteil aus Poly(arylensulfid)-Harz, hergestellt durch Schmelzformen der in Anspruch 1 oder 2 beschriebenen Harzzusammensetzung.

**6.** Verfahren zur Herstellung einer Poly(arylensulfid)-Harzzusammensetzung, wobei das Verfahren das Mischen eines Poly(arylensulfid)-Harzes (A), von Flockengraphit (B) und von elektrisch leitfähigem Ruß (C) als wesentliche Bestandteile sowie das Schmelzkneten der Mischung bei einer Temperatur umfasst, die gleich oder höher als der Schmelzpunkt des Poly(arylensulfid)-Harzes ist, wobei

das Poly(arylensulfid)-Harz (A) eine Schmelzviskosität (V6) im Bereich von 5 bis 45 [Pa·s] aufweist;
der elektrisch leitfähige Ruß (C) Ofenruß mit einer spezifischen Oberfläche von 50 bis 300 [$m^2$/g] ist;
der Gehalt an Flockengraphit (B) 100 bis 230 Masseteile und der Gehalt an elektrisch leitfähigem Ruß (C) 1 bis 30 Masseteile pro 100 Masseteile des Poly(arylensulfid)-Harzes (A) beträgt; und
die Poly(arylensulfid)-Harzzusammensetzung weist eine Schmelzviskosität (R) im Bereich von 100 bis 400 [Pa·s] auf
(wobei die Schmelzviskosität (V6) ein Wert ist, der mit einem Fließprüfgerät nach einer Haltezeit bei 300 °C, einer Belastung von 1,96 $\times$ $10^6$ [Pa] und L/D = 10 [mm]/1 [mm] gemessen wurde, und die Schmelzviskosität (R) ein Wert ist, der mit einem Kapillarrheometer bei einer Temperatur von 350 °C und einer Schergeschwindigkeit von 1216 [$s^{-1}$] gemessen wurde).

**7.** Verfahren zur Herstellung einer Poly(arylensulfid)-Harzzusammensetzung nach Anspruch 6, wobei das Verfahren ferner das Einmischen von Kohlenstofffasern (D) in einer Menge von 1 bis 60 Masseteilen pro 100 Masseteile des Poly(arylensulfid)-Harzes (A) umfasst.

**8.** Verfahren zur Herstellung einer Poly(arylensulfid)-Harzzusammensetzung nach Anspruch 6 oder 7, wobei der Flockengraphit (B) eine durchschnittliche Partikelgröße ($D_{50}$) aufweist, die gemäß dem in der Beschreibung beschriebenen Verfahren bestimmt wird und im Bereich von 1 bis 100 [$\mu$m] liegt.

**9.** Verfahren zur Herstellung einer Poly(arylensulfid)-Harzzusammensetzung nach Anspruch 6 oder 7, wobei der elektrisch leitfähige Ruß (C) eine Primärpartikelgröße im Bereich von 20 bis 50 [nm] aufweist
(wobei die Primärpartikelgröße ein unter Verwendung eines Transmissionselektronenmikroskops gemessener Wert ist).

**10.** Verfahren zur Herstellung eines Formteils aus einer Poly(arylensulfid)-Harzzusammensetzung, wobei das Verfahren umfasst:

Herstellung einer Harzzusammensetzung nach dem in Anspruch 6 oder 7 beschriebenen Verfahren; und
Schmelzformen der Harzzusammensetzung.

**Revendications**

1. Composition de résine de poly(sulfure d'arylène) comprenant une résine de poly(sulfure d'arylène) (A), du graphite en paillettes (B) et du noir de carbone électroconducteur (C) en tant que composants essentiels, dans laquelle

   la résine de poly(sulfure d'arylène) (A) présente une viscosité à l'état fondu (V6) comprise entre 5 et 45 [Pa·s] ;
   le noir de carbone électroconducteur (C) est un noir de carbone de four présentant une surface spécifique comprise entre 50 et 300 [$m^2$/g] ;
   la teneur en graphite en paillettes (B) est comprise entre 100 et 230 parties en masse, et la teneur en noir de carbone électroconducteur (C) est comprise entre 1 et 30 parties en masse, pour 100 parties en masse de la résine de poly(sulfure d'arylène) (A) ; et
   la composition de résine de poly(sulfure d'arylène) présente une viscosité à l'état fondu (R) comprise entre 100 et 400 [Pa·s]
   (où la viscosité à l'état fondu (V6) est une valeur mesurée à l'aide d'un fluidimètre après maintien à 300 °C, sous une charge de 1,96 $\times 10^6$ [Pa] et avec un rapport L/D = 10 [mm]/1 [mm] pendant 6 minutes, et la viscosité à l'état fondu (R) est une valeur mesurée à l'aide d'un rhéomètre capillaire à une température de 350 °C et à un taux de cisaillement de 1 216 [$s^{-1}$] ).

2. Composition de résine de poly(sulfure d'arylène) selon la revendication 1, comprenant en outre des fibres de carbone (D) en une quantité de 1 à 60 parties en masse pour 100 parties en masse de la résine de poly(sulfure d'arylène) (A).

3. Composition de résine de poly(sulfure d'arylène) selon la revendication 1 ou 2, dans laquelle le graphite en paillettes (B) présente une taille moyenne de particules ($D_{50}$) déterminée selon la méthode décrite dans la description, comprise dans une plage de 1 à 100 [$\mu$m].

4. Composition de résine de poly(sulfure d'arylène) selon la revendication 1 ou 2, dans laquelle le noir de carbone électroconducteur (C) présente une taille de particules primaires comprise entre 20 et 50 [nm]
   (la taille des particules primaires étant une valeur mesurée à l'aide d'un microscope électronique à transmission).

5. Article moulé en résine de poly(sulfure d'arylène) obtenu par moulage à l'état fondu de la composition de résine décrite dans la revendication 1 ou 2.

6. Procédé de fabrication d'une composition de résine de poly(sulfure d'arylène), ledit procédé comprenant le mélange d'une résine de poly(sulfure d'arylène) (A), de graphite en paillettes (B) et de noir de carbone électroconducteur (C) en tant que composants essentiels, et le malaxage à l'état fondu du mélange à une température égale ou supérieure au point de fusion de la résine de poly(sulfure d'arylène), dans lequel

   la résine de poly(sulfure d'arylène) (A) présente une viscosité à l'état fondu (V6) comprise entre 5 et 45 [Pa·s] ;
   le noir de carbone électroconducteur (C) est un noir de carbone de four présentant une surface spécifique comprise entre 50 et 300 [$m^2$/g] ;
   la teneur en graphite en paillettes (B) est comprise entre 100 et 230 parties en masse, et la teneur en noir de carbone électroconducteur (C) est comprise entre 1 et 30 parties en masse, pour 100 parties en masse de la résine de poly(sulfure d'arylène) (A) ; et
   la composition de résine de poly(sulfure d'arylène) présente une viscosité à l'état fondu (R) comprise entre 100 et 400 [Pa·s]
   (où la viscosité à l'état fondu (V6) est une valeur mesurée à l'aide d'un fluidimètre après maintien à 300 °C, sous une charge de 1,96 $\times 10^6$ [Pa] et avec un rapport L/D = 10 [mm]/1 [mm] pendant 6 minutes, et la viscosité à l'état fondu (R) est une valeur mesurée à l'aide d'un rhéomètre capillaire à une température de 350 °C et à un taux de cisaillement de 1 216 [$s^{-1}$] ).

7. Procédé de fabrication d'une composition de résine de poly(sulfure d'arylène) selon la revendication 6, le procédé comprenant en outre le mélange de fibres de carbone (D) en une quantité de 1 à 60 parties en masse pour 100 parties en masse de la résine de poly(sulfure d'arylène) (A).

8. Procédé de fabrication d'une composition de résine de poly(sulfure d'arylène) selon la revendication 6 ou 7, dans lequel le graphite en paillettes (B) présente une taille moyenne de particules ($D_{50}$) déterminée selon la méthode décrite dans la description, comprise dans une plage de 1 à 100 [$\mu$m].

**9.** Procédé de fabrication d'une composition de résine de poly(sulfure d'arylène) selon la revendication 6 ou 7, dans lequel le noir de carbone électroconducteur (C) présente une taille de particules primaires comprise entre 20 et 50 [nm]
(la taille des particules primaires étant une valeur mesurée à l'aide d'un microscope électronique à transmission).

**10.** Procédé de fabrication d'un article moulé en résine de poly(sulfure d'arylène), ledit procédé comprenant :

la préparation d'une composition de résine selon le procédé décrit dans la revendication 6 ou 7 ; et
le moulage à l'état fondu de la composition de résine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016063855 A
- WO 2015190324 A
- JP 2011006707 A
- US 5093035 A
- JP 7228699 A
- WO 2010058713 A